# EUROPÄISCHE PATENTSCHRIFT

(11) **EP 1 820 672 B1**
(45) Veröffentlichungstag und Bekanntmachung des Hinweises auf die Patenterteilung: **15.04.2009**
(21) Anmeldenummer: 06003316.4
(22) Anmeldetag: 17.02.2006
(51) Int. Cl.: B60D 1/06, B60D 1/28

(54) **Anhängekupplung für Zugfahrzeuge**
Trailer hitch for towing vehicles
Attelage de remorque pour véhicules tracteurs

(43) Veröffentlichungstag der Anmeldung: 22.08.2007
(73) Patentinhaber: GKN Walterscheid Cramer GmbH, 45356 Essen (DE)
(72) Erfinder: Steiner, Peter, 45721 Haltern am See (DE)
(74) Vertreter: Müller, Thomas Michael

(56) Entgegenhaltungen:
- EP-A- 1 302 341
- EP-A- 1 426 202
- EP-A- 1 445 127
- EP-A- 1 529 667
- US-A- 3 047 839
- US-A- 3 479 057
- US-A- 5 087 064
- US-A1- 2004 201 201
- US-B1- 6 802 523

## Beschreibung

Die Erfindung betrifft eine Anhängekupplung für Zugfahrzeuge, mit einem am Zugfahrzeug angeordneten Kupplungselement und einem am Anhänger angeordneten Gegenkupplungselement, oder umgekehrt, wobei das Gegenkupplungselement mittels eines Niederhalters gegenüber dem Kupplungselement verriegelt ist, wobei ferner eine Verstelleinheit für den Niederhalter vorgesehen ist, um seine Höhe gegenüber einer Basis zu variieren, und wobei der Niederhalter inklusive Verstelleinheit als zusammengehörige Baugruppe lösbar in oder an der Basis verankert ist.

Eine Anhängekupplung der eingangs beschriebenen Ausführungsform ist durch die US 6 802 523 B1 oder auch die US 5 087 064 bekannt geworden. In beiden Fällen lässt die Verstelleinheit für den Niederhalter nur eine Abstandsänderung zwischen Niederhalter und Basis in einzelnen wenigen Schritten zu. Dadurch sind die Einsatzmöglichkeiten begrenzt.

Bei einer Anhängekupplung entsprechend der US 3 779 653 sorgt die Verstelleinheit dafür, dass der Niederhalter in angehobener Position in eine gleichsam aktive und inaktive Stellung (horizontal) verschwenkt werden kann. Eine weitere Funktion übernimmt die Verstelleinheit nicht.

Darüber hinaus sind allgemein Anhängekupplungen bekannt, die über Niederhalter verfügen, welche sich um eine horizontale Achse zumeist vertikal verschwenken lassen. Bei dem Kupplungselement handelt es sich beispielhaft um einen Kupplungsbolzen oder eine Kupplungskugel, während das Gegenkupplungselement als Zugöse oder Kupplungspfanne ausgeführt werden kann. Der verschwenkbare Niederhalter sorgt im Allgemeinen dafür, dass beispielsweise die auf eine Kupplungskugel aufgesetzte Kugelpfanne in dieser Kupplungsstellung verriegelt wird. Im Rahmen der zuvor angesprochenen US 3 779 653 sorgt der Niederhalter dagegen dafür, dass eine über eine Kupplungskugel geführte Zugöse sich nicht lösen kann.

Bei der EP 1 302 341 A2 ist ein spezieller Mechanismus vorgesehen, welcher den Niederhalter von seiner Offenstellung in seine Schließstellung und umgekehrt durch seitliches Verschwenken überführt. - Der sämtliche vorbekannte Stand der Technik stößt dort an Grenzen, wo es darum geht, etwaigen Verschleiß von Kupplungselement und Gegenkupplungselement auszugleichen. Beispielsweise ist es denkbar, dass die Kupplungspfanne durch Verschleiß oder unsachgemäße Behandlung mit zunehmenden Spiel gegenüber einer Kupplungskugel von dem Niederhalter verriegelt wird bzw. der Niederhalter durch dieses vermehrte Spiel Schaden nimmt. Neben diesem durch Verschleiß bedingten Spiel werden in der Praxis auch Fertigungstoleranzen zwischen Kupplungselement und Gegenkupplungselement beobachtet, die zudem vermehrt dann auftreten, wenn Kupplungselement und Gegenkupplungselement von unterschiedlichen Herstellern miteinander kombiniert werden sollen, Hier will die Erfindung insgesamt Abhilfe schaffen.

Der Erfindung liegt das technische Problem zu Grunde, eine Anhängekupplung für Zugfahrzeuge der eingangs beschriebenen Ausführungsform so weiter zu entwickeln, dass etwaiges Spiel zwischen Kupplungselement und Gegenkupplungselement problemlos und auf einfache Weise stufenlos ausgeglichen bzw. beherrscht werden kann.

Zur Lösung dieser technischen Problemstellung ist eine gattungsgemäße Anhängekupplung im Rahmen der Erfindung dadurch gekennzeichnet, dass die Verstelleinheit ein gegenüber dem Niederhalter abstandsveränderliches Stellmittel aufweist, welches sich manuell auf den gewünschten Abstand einstellen lässt, und dass das Stellmittel als in einen Schaft des Niederhalters eintauchende Stellschraube ausgebildet ist.

Im Rahmen der Erfindung bilden der Niederhalter und die Verstelleinheit insgesamt eine Baugruppe, welche - wie an sich bekannt - eine Höhenverstellung des Niederhalters gegenüber der Basis bzw. eine Einstellung des gewünschten Abstandes ermöglicht. Diese Baugruppe kann nun zusammengenommen in und/oder an der Basis verankert oder aus dieser heraus genommen werden, um beispielsweise für die erforderliche Verstellung des Niederhalters mit Hilfe der Verstelleinheit sorgen zu können.

Um die gewünschte Höhenverstellung des Niederhalters im Detail zu realisieren, weist die Verstelleinheit ein gegenüber dem Niederhalter abstandsveränderliches Stellmittel auf. Bei diesem Stellmittel handelt es sich um eine in einen Schaft des Niederhalters eintauchende Stellschraube. Außerdem verfügt die Verstelleinheit bevorzugt über eine Feder zur Druckbeaufschlagung des Stellmittels, um unbeabsichtigte Verstellungen des Stellmittels zu verhindern.

Im Detail ist wenigstens ein Verriegelungsbolzen vorgesehen, um die Baugruppe aus Niederhalter und Verstelleinheit in oder an der Basis lösbar zu verankern. Zusätzlich mag ein Fixierbolzen realisiert werden, um die Verstelleinheit in eingestellter Höhenposition des Niederhalters gegenüber der Basis festzulegen. Beide Bolzen stellen sicher, dass die Baueinheit aus Niederhalter und Verstelleinheit zum einen einwandfrei und sicher in der Basis fixiert ist und zum anderen die (zuvor eingestellte) Höhe des Niederhalters gegenüber der Basis beibehalten wird. Selbstverständlich lassen sich sowohl der Verriegelungsbolzen als auch der Fixierbolzen aus der Basis entfernen, damit die fragliche Baugruppe von der Basis freikommt. Außerdem versteht es sich, dass beide Bolzen unabhängig voneinander ausgestaltet sind und ihrer Funktion getrennt nachgehen können.

Der Niederhalter verfügt seinerseits über den bereits angesprochenen Schaft mit der darin eintauchenden Stellschraube und einen das Kupplungselement übergreifenden Arm. Insgesamt wird der Niederhalter inklusive Stelleinheit in einer Bohrung in der Basis aufgenommen. In diese Bohrung tauchen vorteilhaft ergänzend sowohl der Verriegelungsbolzen als auch der Fixierbolzen ein, und zwar tangential, während die Baugruppe axial in der Bohrung aufgenommen wird. Dabei sorgt der Verriegelungsbolzen dafür, dass der Niederhalter in der gewünschten Position verriegelt ist und nicht seitlich wegschwenken kann. Diese Position korrespondiert meistens dazu, dass der Arm des Niederhalters das Kupplungselement wie gewünscht übergreift und für die Verriegelung des Gegenkupplungselementes mit dem Kupplungselement sorgt. Dazu wirkt der Verriegelungsbolzen mit dem Schaft des Niederhalters zusammen.

Der Fixierbolzen sorgt demgegenüber dafür, dass sich bei in die Bohrung bzw. in die Basis eintauchendem Schaft des Niederhalters die in den Schaft eintauchende und federbeaufschlagte Stellschraube nicht bewegt bzw. keinen unkontrollierten Verstellungen unterzogen wird. Insofern unterstützt der Fixierbolzen die mit der Stellschraube zusammenwirkende Feder zur Druckbeaufschlagung der Stellschraube. Gleichzeitig sorgt der Fixierbolzen dafür, dass der Niederhalter in seiner bereits durch den Verriegelungsbolzen vorgegebenen Position beim Übergreifen des Kupplungselementes bzw. in Achsrichtung der Basis zusätzlich fixiert wird. Dazu sind beide Bolzen regelmäßig übereinander angeordnet und greifen in Führungen bzw. Führungsbohrungen in der Basis ein.

Zusätzlich zu der Bohrung als Aufnahme für die Baugruppe aus Niederhalter und Verstelleinheit verfügt die Basis über ein Fangmaul für das Gegenkupplungselement. Das Fangmaul ist vorteilhaft mit seitlichen Anschlagflächen ausgerüstet und weist die bereits angesprochene Bohrung zur Aufnahme der fraglichen Baugruppe aus Niederhalter und Verstelleinheit auf.

Im Ergebnis schlägt die Erfindung eine Anhängekupplung vor, die zum ersten Mal mit einem höhenverstellbaren Niederhalter ausgerüstet ist. Der höhenverstellbare Niederhalter bzw. der Niederhalter inklusive Verstelleinheit wird insgesamt als Baugruppe in der Bohrung des Fangmauls aufgenommen. Um gegebenenfalls unterschiedliches Spiel zwischen Kupplungselement und Gegenkupplungselement auszugleichen und dennoch eine sichere Funktion des Niederhalters zu gewährleisten, kann dieser aus der Bohrung herausgenommen und in diese wieder eingesetzt und hierin verriegelt werden. In herausgenommener Position lässt sich die Höhe des Niederhalters bzw. der Abstand seines Armes gegenüber der Basis variieren. Hierzu wird meistens manuell das Stellmittel bzw. die Stellschraube entweder in den Schaft des Niederhalters eingedreht oder aus diesem herausgedreht.

Da der Kopf der besagten Stellschraube bzw. des Stellmittels zugleich die Basis der Verstelleinheit bzw. des Niederhalters insgesamt darstellt, verfügt der Niederhalter über eine auf diese Weise verstellbare Basis. Infolge dessen kann mit der verstellbaren Basis gesteuert werden, wie weit der Schaft des Niederhalters aus der Bohrung im Fangmaul vorkragt und folgerichtig welche Höhe der an den Schaft horizontal angeschlossene Arm des Niederhalters gegenüber der Basis einnimmt.

Der manuell verstellbare Niederhalter bzw. die manuell einstellbare Verstelleinheit lässt sich zusammen mit dem Niederhalter in der betreffenden Bohrung verriegeln, und zwar mit Hilfe des selbstverständlich gegenüber der Basis bzw. dem Fangmaul lösbar ausgeführten Verriegelungsbolzens. Zusätzlich ist der ebenfalls lösbar ausgestaltete Fixierbolzen realisiert, welcher die zuvor manuell verstellte Basis festlegt und ungewollte Verstellungen des Niederhalters in eingebautem Zustand verhindert. Hierin sind die wesentlichen Vorteile zu sehen.

Im Folgenden wird die Erfindung anhand einer lediglich ein Ausführungsbeispiel darstellenden Zeichnung näher erläutert; es zeigen:
- Fig. 1: die erfindungsgemäße Anhängekupplung für Zugfahrzeuge in schematischer Explosionsdarstellung,
- Fig. 2: eine Aufsicht auf den Gegenstand nach Fig. 1 und
- Fig. 3: einen teilweisen Schnitt durch den Gegenstand nach Fig. 1.

In den Figuren ist eine Anhängekupplung für Zugfahrzeuge dargestellt. Wie allgemein bekannt dient die Anhängekupplung dazu, ein nicht gezeigtes Zugfahrzeug mit einem ebenfalls nicht dargestellten Anhänger zu koppeln. Zu diesem Zweck verfügt das Zugfahrzeug über ein an ihm befestigtes Kupplungselement 1 und ist der Anhänger mit einem zugehörigen Gegenkupplungselement 2 ausgerüstet. Das Gegenkupplungselement 2 ist nur angedeutet.

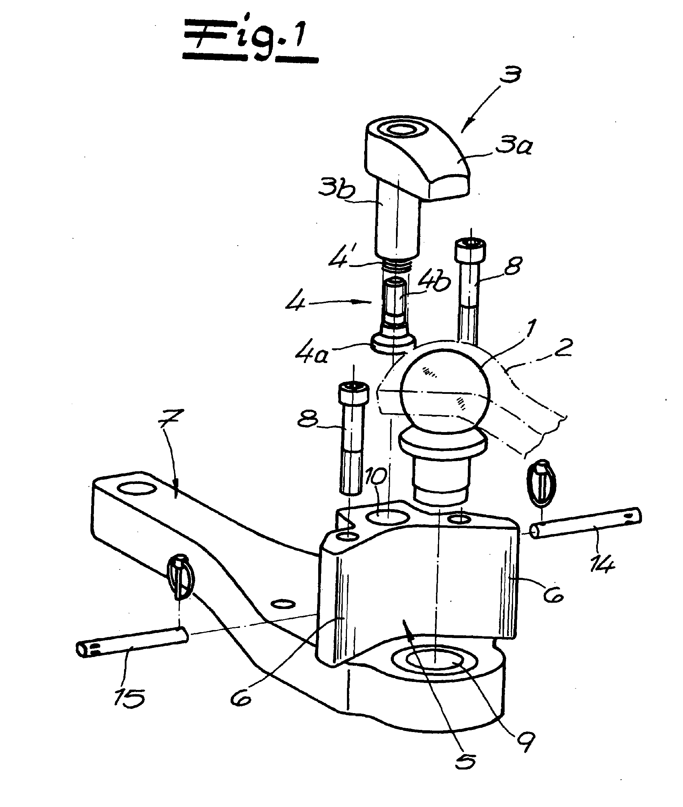

Bei dem Kupplungselement 1 handelt es sich im Rahmen der Darstellung und nicht einschränkend um eine Kupplungskugel 1, wohingegen das Gegenkupplungselement 2 als Zugpfanne 2 ausgebildet ist, wie Fig. 1 andeutet. Es versteht sich, dass anstelle des Zugfahrzeuges selbstverständlich auch der Anhänger mit dem Kupplungselement 1 ausgerüstet werden kann, wohingegen das Zugfahrzeug das zugehörige Gegenkupplungselement 2 aufweist.

Um das Gegenkupplungselement 2 gegenüber dem Kupplungselement 1 zu verriegeln, ist ein Niederhalter 3 realisiert, welcher in Verbindung mit einer Stelleinheit bzw. Verstelleinheit 4, 4' eine zusammengehörige Baugruppe 3, 4, 4' formt.

Zum grundsätzlichen Aufbau gehört noch ein Fangmaul 5 mit seitlichen Anschlagflächen 6, welches insgesamt einteilig aufgebaut ist. Die seitlichen Anschlagflächen 6 begrenzen einen Schwenkweg des Gegenkupplungselementes 2 gegenüber dem Kupplungselement 1 und folglich des Anhängers gegenüber dem Zugfahrzeug. Schließlich ist noch eine Basis 7 vorgesehen, auf welcher das einteilige Fangmaul 5 befestigt ist, und zwar mit Hilfe von Schrauben 8.

Zusätzlich dient die Basis 7 zur Aufnahme des Kupplungselementes 1 in einer Steckaufnahme 9. Der Niederhalter 3 respektive die Baugruppe 3, 4 aus Niederhalter 3 und Stelleinheit 4 wird dagegen in dem Fangmaul 5 aufgenommen. Zu diesem Zweck ist das Fangmaul 5 mit einer im Wesentlichen vertikalen Bohrung 10 ausgerüstet.

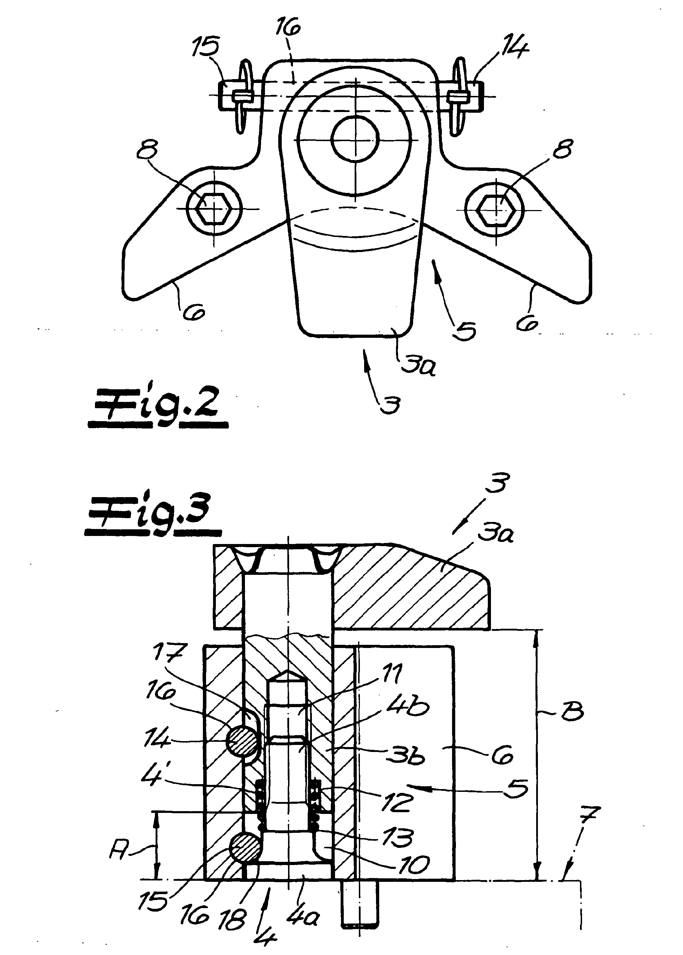

Die Basis 7 ist an das nicht dargestellte Zugfahrzeug angeschlossen, während das Gegenkupplungselement 2 mit dem Anhänger in Wirkverbindung steht. Damit sich das Gegenkupplungselement 2 nicht von dem Kupplungselement 1 lösen kann, übergreift der Niederhalter 3 mit seinem größtenteils horizontalen Arm 3a bei in die Bohrung 10 eingebautem Zustand das Gegenkupplungselement 2. Dazu taucht der Niederhalter 3 mit einem Schaft 3b axial in die Bohrung 10 ein, wie insbesondere die Fig. 3 deutlich macht. Arm 3a und Schaft 3b sind rechtwinklig zueinander angeordnet.

Der Niederhalter 3 verfügt über eine verstellbare Basis 4a. Die verstellbare Basis 4a ist Bestandteil der Verstelleinheit bzw. Stelleinheit 4, 4'. Tatsächlich setzt sich die Verstelleinheit 4 aus einem Stellmittel 4 und einer Feder 4' zusammen.

Bei dem Stellmittel 4 handelt es sich im Rahmen des Ausführungsbeispiels um eine Stellschraube 4, die über einen Kopf 4a und einen Schaft 4b verfügt. Der Kopf 4a der Stellschraube 4 bildet die verstellbare Basis 4a für den Niederhalter 3. Mit dem Schaft 4b greift das Stellmittel bzw. die Stellschraube 4 in den Schaft 3b des Niederhalters 3 ein und dort in eine Bohrung 11. Tatsächlich ist die Bohrung 11 als Gewindebohrung 11 ausgeführt und verfügt der Schaft 4b der Stellschraube 4 über ein korrespondierendes Gewinde. Auf diese Weise kann das Stellmittel bzw. die Stellschraube 4 in den Schaft 3b des Niederhalters 3 mit veränderlichem Abstand A eingeschraubt und aus diesem wieder ausgeschraubt werden (vgl. Fig. 3).

Als Folge dieses veränderlichen Abstandes A ändert sich natürlich auch ein Abstand B des Arms 3a des Niederhalters 3 gegenüber einer Kopffläche der Basis 7, wie die Fig. 3 ebenfalls deutlich macht. Dadurch kann der Niederhalter 3 inklusive Verstelleinheit 4 nicht nur das Spiel zwischen Kupplungselement 1 und Gegenkupplungselement 2 verstellbar ausgleichen, sondern trägt insbesondere unterschiedlich gestalteten Kupplungselementen 1/Gegenkupplungselementen 2 - beispielsweise von verschiedenen Herstellern - Rechnung. Meistens wird man den Abstand B so wählen, dass zwischen Kupplungselement 1 und Gegenkupplungselement 2 ein Spiel von mindestens 5 mm verbleibt. Das ist selbstverständlich nicht zwingend.

Das Stellmittel 4 lässt sich manuell - ohne Werkzeug - auf den gewünschten Abstand A einstellen. Damit es vor dem Einbau in die Bohrung 10 im Niederhalter 5 nicht zu ungewollten Verstellungen kommt, sorgt die Feder 4' dafür, dass das Stellmittel 4 gegenüber dem Schaft 3b des Niederhalters 3 vorgespannt wird. Zu diesem Zweck wird die Feder 4' in einer Aufnahme 12 des Schaftes 3b aufgenommen und stützt sich an einer Kante 13 des Stellmittels 4 bzw. des Schaftes 4b ab. Folglich muss das Stellmittel 4 zur Variation des Abstandes A gegen die Kraft der Feder 4' bewegt werden.

Sobald der gewünschte Abstand A eingestellt ist, wird das Aggregat 3, 4, 4' aus Niederhalter 3 und Verstelleinheit 4, 4' zusammengenommen in die Bohrung 10 im Fangmaul 5 eingesetzt. Damit im Anschluss hieran der Niederhalter 3 respektive die Baugruppe 3, 4, 4' die gewünschte Funktion übernimmt und insbesondere der Arm 3a des Niederhalters 3 in Längsrichtung der Basis 7 das Kupplungselement 1 inklusive eingehängtem Gegenkupplungselement 2 mit dem gewünschten Spiel übergreifen kann, wird die Baugruppe 3, 4, 4' gegenüber der Basis 7 verriegelt. Dazu sind im Ausführungsbeispiel insgesamt zwei Bolzen 14, 15 vorgesehen, nämlich ein Verriegelungsbolzen 14 und ein Fixierbolzen 15.

Der Verriegelungsbolzen 14 sorgt dafür, dass die Baugruppe 3, 4, 4' lösbar in der Basis 7 verankert wird, nämlich in der Bohrung 10 im Fangmaul 5. Dagegen stellt der Fixierbolzen 15 sicher, dass der Abstand A der verstellbaren Basis 4a der Verstelleinheit 4 gegenüber dem Schaft 3b des Niederhalters 3 eingehalten wird. Gleichzeitig sorgt der Fixierbolzen 15 ergänzend dafür, dass der Arm 3a des Niederhalters 3 seine im eingebauten Zustand festgelegte Position beibehält.

Zu diesem Zweck greifen die beiden Bolzen 14, 15 jeweils in eine Bohrung 16 im Fangmaul 5 ein. Die Bohrung 16 verläuft tangential zur senkrecht gegenüber der Basis 7 angeordnete Bohrung 10 im Fangmaul 5. Dadurch öffnet sich die jeweilige Bohrung 16 im Bereich dieser (Vertikal-)Bohrung 10, so dass der dadurch jeweils zumindest teilweise in der (Vertikal-)Bohrung 10 freiwerdende Bolzen 14, 15 die gewünschten Fixier-/Verriegelungsfunktionen übernehmen kann.

Im Detail greift der Verriegelungsbolzen 14 im Bereich der (Vertikal-)Bohrung 10 in eine Aufnahme 17 des Schaftes 3b ein, so dass der Niederhalter 3 in sämtlichen drei Raumrichtungen fixiert ist. Dagegen wirkt der Fixierbolzen 15 mit einer im Querschnitt bogenförmigen Anlaufkante 18 des Kopfes 4a der Stellschraube 4 zusammen und verhindert auf diese Weise, dass sich die Stellschraube 4 gegenüber der Bohrung 11 verstellen kann. Tatsächlich wird der Kopf 4a der betreffenden Stellschraube 4 zwischen der Anlaufkante 18 und der Basis 7 bei eingestecktem Fixierbolzen 15 eingespannt. Dadurch wird auch die Verstelleinheit 4 festgelegt und erfährt zusätzlich der Niederhalter 3 eine Fixierung.

## Patentansprüche

1. Anhängekupplung für Zugfahrzeuge, mit einem am Zugfahrzeug angeordneten Kupplungselement (1) und einem am Anhänger angeordneten Gegenkupplungselement (2), oder umgekehrt, wobei
- das Gegenkupplungselement (2) mittels eines Niederhalters (3) gegenüber dem Kupplungselement (1) verriegelt ist, wobei ferner
- eine Verstelleinheit (4, 4') für den Niederhalter (3) vorgesehen ist, um seine Höhe (B) gegenüber einer Basis (7) zu variieren, und wobei
- der Niederhalter (3) inklusive Verstelleinheit (4, 4') als zusammengehörige Baugruppe (3, 4, 4') lösbar in oder an der Basis (7) verankert ist,
**dadurch gekennzeichnet,**
**dass** die Verstelleinheit (4, 4') ein gegenüber dem Niederhalter (3) abstandsveränderliches Stellmittel (4) aufweist, welches sich manuell auf den gewünschten Abstand (B) einstellen lässt, und
**dass** das Stellmittel (4) als in einen Schaft (3b) des Niederhalters (3) eintauchende Stellschraube (4) ausgebildet ist.

2. Anhängekupplung nach Anspruch 1, **dadurch gekennzeichnet, dass** wenigstens ein Verriegelungsbolzen (14) vorgesehen ist, um die Baugruppe (3, 4, 4') in und/oder an der Basis (7) lösbar zu verankern.

3. Anhängekupplung nach Anspruch 1 oder 2, **dadurch gekennzeichnet, dass** wenigstens ein Fixierbolzen (15) realisiert ist, um die Verstelleinheit (4, 4') in eingestellter Höhenposition des Niederhalters (3) festzulegen.

4. Anhängekupplung nach einem der Ansprüche 1 bis 3, **dadurch gekennzeichnet, dass** die Verstelleinheit (4, 4') eine Feder (4') zur Druckbeaufschlagung des Stellmittels (4) aufweist.

5. Anhängekupplung nach einem der Ansprüche 1 bis 4, **dadurch gekennzeichnet, dass** der Niederhalter (3) neben dem Schaft (3b) einen das Kupplungselement (1) übergreifenden Arm (3a) aufweist.

6. Anhängekupplung nach einem der Ansprüche 1 bis 5, **dadurch gekennzeichnet, dass** der Niederhalter (3) inklusive Verstelleinheit (4) in einer Bohrung (10) in der Basis (7) aufgenommen wird.

7. Anhängekupplung nach einem der Ansprüche 1 bis 6, **dadurch gekennzeichnet, dass** die Basis (7) ein Fangmaul (5) für das Gegenkupplungselement (2) aufweist.

8. Anhängerkupplung nach Anspruch 7, **dadurch gekennzeichnet, dass** das Fangmaul (5) mit seitlichen Anschlagflächen (6),ausgerüstet ist.

## Claims

1. A trailer coupling for traction vehicles, having a coupling element (1) arranged at the traction vehicle and a counter coupling element (2) arranged at the trailer, or vice versa, wherein
the counter coupling element (2) is locked relative to the coupling element (1) by means of a holding-down device (3), wherein furthermore
an adjusting unit (4, 4') is provided for the holding down device (3) in order to vary the height (B) of the latter relative to a base (7), and wherein
the holding-down device (3) including the adjusting unit (4, 4'), in the form of a combined assembly (3, 4, 4'), are releasably anchored in or at the base (7),
**characterised in**
**that** the adjusting unit (4, 4') comprises a setting element (4) whose distance from the holding-down element is variable and which can be set manually to the required distance (B), and
**that** the setting element (4) is provided in the form of a setting screw (4) which enters a shank (3b) of the holding-down device (3).

2. A trailer coupling according to claim 1, **characterised in that** there is provided at least one locking pin (14) for releasably anchoring the assembly (3, 4, 4') in and/or at the base (7).

3. A trailer coupling according to claim 1 or 2, **characterised in that** there is provided at least one fixing pin (15) for fixing the adjusting unit (4, 4') at a set height of the holding-down device (3).

4. A trailer coupling according to any one of claims 1 to 3, **characterised in that** the adjusting unit (4, 4') comprises a spring (4') for pressure-loading the setting element (4).

5. A trailer coupling according to any one of claims 1 to 4, **characterised in that**, in addition to the shank (3b), the holding-down device comprises an arm (3a) which extends over the coupling element (1).

6. A trailer coupling according to any one of claims 1 to 5, **characterised in that** the holding down device (3) including the adjusting unit (4) are received in a bore (10) in the base (7).

7. A trailer coupling according to any one of claims 1 to 6, **characterised in that** the base (7) comprises a catching mouth (5) for the counter coupling element (2).

8. A trailer coupling according to claim 7, **characterised in that** the catching mouth (5) is provided with lateral abutment faces (6).

## Revendications

1. Attelage de remorque pour véhicules tracteurs, comprenant un élément d'attelage (1) disposé sur le véhicule tracteur et un élément de contre-attelage (2) disposé sur la remorque, ou inversement,
- l'élément de contre-attelage (2) étant verrouillé au moyen d'un serre-flan (3) par rapport à l'élément d'attelage (1),
- une unité de positionnement (4, 4') étant également prévue pour le serre-flan (3) pour modifier sa hauteur (B) par rapport à une base (7), et
- le serre-flan (3), y compris l'unité de positionnement (4, 4'), en tant qu'ensemble (3, 4, 4') cohérent étant ancré de façon amovible dans ou sur la base (7),
**caractérisé**
**en ce que** l'unité de positionnement (4, 4') présente un moyen de réglage (4) variable en distance par rapport au serre-flan (3), lequel peut être réglé manuellement sur la distance (B) souhaitée, et
**en ce que** le moyen de réglage (4) est conçu sous forme de vis de réglage (4) plongeant dans une tige (3b) du serre-flan (3).

2. Attelage de remorque selon la revendication 1, **caractérisé en ce qu'**il est prévu au moins un boulon de verrouillage (14) pour fixer l'ensemble (3, 4, 4') de façon amovible dans et/ou sur la base (7).

3. Attelage de remorque selon la revendication 1 ou 2, **caractérisé en qu'**au moins un boulon de fixation (15) est réalisé pour fixer l'unité de positionnement (4, 4') dans une position de hauteur réglée du serre-flan (3).

4. Attelage de remorque selon l'une quelconque des revendications 1 à 3, **caractérisé en ce que** l'unité de positionnement (4, 4') présente un ressort (4') pour l'application de pression sur le moyen de réglage (4).

5. Attelage de remorque selon l'une quelconque des revendications 1 à 4, **caractérisé en ce que** le serre-flan (3) présente à côté de la tige (3b) un bras (3a) recouvrant l'élément d'attelage (1).

6. Attelage de remorque selon l'une quelconque des revendications 1 à 5, **caractérisé en ce que** le serre-flan (3), avec l'unité de positionnement (4), est réceptionné dans un perçage (10) dans la base (7).

7. Attelage de remorque selon l'une quelconque des revendications 1 à 6, **caractérisé en ce que** la base (7) présente une mâchoire d'attache (5) pour l'élément de contre-attelage (2).

8. Attelage de remorque selon la revendication 7, **caractérisé en ce que** la mâchoire d'attache (5) est équipée de surfaces d'accrochage (6) latérales.
